# EUROPÄISCHE PATENTSCHRIFT

(11) **EP 1 019 451 B1**
(45) Veröffentlichungstag und Bekanntmachung des Hinweises auf die Patenterteilung: **12.03.2003**
(21) Anmeldenummer: 98913647.8
(22) Anmeldetag: 05.03.1998
(51) Int. Cl.: C08K 5/29, C08K 5/15, C08G 18/42

(54) **VERFAHREN ZUR HERSTELLUNG HALBHARTER KOMPAKTER ODER ZELLIGER FORMKÖRPER AUF PUR-BASIS UND DEREN STABILISIERUNG, DARAUS HERGESTELLTE FORMKÖRPER, SOWIE DEREN VERWENDUNG**
METHOD FOR PRODUCING SEMI-RIGID COMPACT OR CELLULAR SHAPED BODIES WITH A PUR BASE AND THE STABILIZATION THEREOF; SHAPED BODIES PRODUCED ACCORDING TO SAID METHOD AND THE USE THEREOF
PROCEDE DE PRODUCTION DE CORPS MOULES SEMI-RIGIDES COMPACTS OU CELLULAIRES A BASE DE PUR ET LEUR STABILISATION, CORPS MOULES FABRIQUES SELON CE PROCEDE ET LEUR UTILISATION

(30) Priorität: 17.03.1997 DE 19710978
(43) Veröffentlichungstag der Anmeldung: 19.07.2000
(73) Patentinhaber: Bayer Aktiengesellschaft, 51368 Leverkusen (DE)
(72) Erfinder: MICHELS, Erhard, D-51061 Köln (DE); PLEISS, Klaus, D-51469 Bergisch Gladbach (DE); DICK, Hans-Norbert, D-51381 Leverkusen (DE)
(86) Internationale Anmeldenummer: EP9801245
(87) Internationale Veröffentlichungsnummer: WO98041575

(56) Entgegenhaltungen:
- EP-A- 0 282 072
- EP-A- 0 450 439
- EP-A- 0 460 481
- EP-A- 0 597 382
- EP-A- 0 628 541
- GB-A- 1 014 974
- GB-A- 1 113 926

## Beschreibung

Die Erfindung betrifft ein Verfahren zur Herstellung von Polyester-Polyurethanmassen, sowie deren Stabilisierung gegen hydrolytische Alterungserscheinungen durch eine Wirkstoffkombination aus carbodiimidhaltigen Verbindungen mit Lacton-Derivaten, daraus hergestellte Formkörper sowie deren Verwendung für halbharte kompakte und/oder zellige Formteile.

Halbharte elastische Polyurethanformteile in kompakter oder zelliger, d.h., leicht geschäumter Ausführung werden oftmals auf der Basis von Polyester-Polyurethanmassen aufgebaut. Um die Beständigkeit dieser Materialien in feuchter Umgebung, d.h., unter hydrolytisch wirksamen Bedingungen zu verbessern, hat sich seit langem der Zusatz von Carbodiimiden bewährt (Kunststoff Handbuch, Band VII, Polyurethane 1994 von Dr. G. Oertel, Carl-Hanser-Verlag, München) wobei aber auch weitere Stoffklassen wie z. B. 2-Phenylimino-oxazolidine oder Hydroxyethyl-Harnstoffe Wirkung zeigen (FR-PS 1 450 919, US-PS 3 795 638).

Unbefriedigend ist diese Materialausrüstung mit Carbodiimiden aber, wenn relativ weiche Formkörper in einer Härte <90 Shore A gefertigt werden, die zudem chemisch sehr linear aufgebaut sind und möglicherweise hohe Aktivator-/Katalysatorgehalte zur Beschleunigung der PUR-Aufbaureaktion enthalten. Hierbei führt z.B. die Erhöhung eines Carbodiimid-Anteils, selbst über den allgemein üblichen und empfohlenen Gehalt von ca. 2 Gew.-% in der Polyurethanmasse, nicht mehr zur nachhaltigen Stabilität des Formteils gegenüber hydrolytischem Angriff.

Es wurde nun gefunden, daß die stabilisierende Wirkung von Carbodiimiden bei gleichzeitiger Anwesenheit von Lactonen deutlich gesteigert werden kann. Da die eingesetzten Lactone bei Abwesenheit von Carbodiimiden keine Wirkung zeigen, liegt eine eindeutige Kombinationswirkung vor. Überraschend ist weiterhin, daß die gefundene Wirkstoffkombination in höherem Maße stabilisierend wirkt, als ein alleiniger, selbst auf mehrfachen Gehalt erhöhter Carbodiimid-Gehalt.

Gegenstand der Erfindung ist somit ein Verfahren zur Herstellung von kompakten, transparenten, sowie zelligen, geschäumten PUR-Formteilen nach dem Polyisocyanat-Polyadditionsverfahren in einer Härte von 40 bis 90 Shore A durch Umsetzung von
a) organischen und/oder modifizierten organischen Polyisocyanaten mit
b) mindestens einer höhermolekularen Verbindung mit mindestens zwei reaktiven Wasserstoffen, sowie
c) niedermolekularen Kettenverlängerungs- und/oder Vernetzungsmitteln in Gegenwart von
d) Katalysatoren und
e) dem erfindungsgemäßen Wirkstoffgemisch aus Carbodiimiden und Lactonen sowie
f) Hilfsmitteln und Zuatzstoffen,
dadurch gekennzeichnet, daß die Komponente e) mit 0,50 bis 20 Gew.-% eines Lactons bzw. Lactongemisches sowie mit 0,2 bis 4,0 Gew.-% eines Carbodiimids bzw. Carbodiimidgemisches in der Reaktionsmasse enthalten ist.

Zu den erfindungsgemäß hergestellten Formkörpern und ihren Ausgangskomponenten a) bis f) ist im einzelnen folgendes auszuführen:
a) Als organische Polyisocyanate (a) kommen aliphatische, cycloaliphatische, araliphatische und vorzugsweise aromatische mehrwertige Isocyanate in Frage. Im einzelnen seien beispielhaft genannt: Alkylendiisocyanate mit 4 bis 12 Kohlenstoffatomen im Alkylenrest, wie 1,12-Dodecan-diisocyanat, 2-Ethyltetramethylen-diisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Di-cyclohexylmethan-diisocyanat sowie die entsprechenden Isomerengemische; araliphatische Diisocyanate, wie z. B. 1,4-Xylylen-diisocyanat und Xylylen-diisocyanat-Isomerenmischungen und vorzugsweise aromatischen Di- und Polyisocyanate, wie z. B. 2,4- und 2,6-Toluylen-diisocyanat und die entsprechenden Isomerengemische; 1,5-Naphthylen-diisocyanat (NDI), 4,4'-, 2,4'- und 2,2'-Diphenylmethan-diisocyanat (MDI) und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'und 2,2'-Diphenylmethan-diisocyanaten und Polyphenyl-polymethylen-polyisocyanaten (Roh-MDI) und Mischungen aus Roh-MDI und Toluylen-diisocyanaten. Die organischen Di- und Polyisocyanate können einzeln oder in Form von Mischungen eingesetzt werden.
   Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion-, Uretonimin- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht, beispielsweise mit nieder-molekularen Diolen, Triolen, Dialkylenglykolen, Trialkylenglykolen oder Polyoxyalkylenglykolen mit Molekulargewichten bis 6 000, modifiziertes 4,4'-Diphenylmethan-diisocyanat, Mischungen aus 4,4'- und 2,4'-Diphenylmethan-diisocyanaten oder 2,4- bzw. 2,6-Toluylen-diisocyanat, wobei als Di- bzw. Polyoxyalkylen-glykole, die einzeln oder als Gemische eingesetzt werden können, beispielsweise genannt seien: Diethylen-, Dipropylen-, Polyoxyethylen-, Polyoxypropylen- und Polyoxypropylen-polyoxyethylen-glykole. Geeignet sind auch NCO-Gruppen enthaltende Prepolymere mit NCO-Gehalten von 25 bis 3,5 Gew.-%, vorzugsweise von 23 bis 13 Gew.-%, bezogen auf das Gesamtgewicht, hergestellt aus den nachfolgend beschriebenen Polyether- und/oder vorzugsweise Polyester-polyolen und 4,4'-Diphenylmethandiisocyanat, Mischungen aus 2,4'- und 4,4'-Diphenylmethandiisocyanat, 2,4- und/oder 2,6-Toluylen-diisocyanaten, sowie NDI oder Roh-MDI. Bewährt haben sich ferner flüssige Carbodiimidgruppen und/oder Isocyanuratringe enthaltende Polyisocyanate mit NCO-Gehalten von 33,6 bis 15 Gew.-%, vorzugsweise 31 bis 21 Gew.-%, bezogen auf das Gesamtgewicht, z.B. auf Basis von 4,4'-, 2,4'- und/oder 2,2'-Diphenylmethandiisocyanat und/oder 2,4- und/oder 2,6-Toluylen-diisocyanat.
   Die modifizierten Polyisocyanate können miteinander oder mit unmodifizierten organischen Polyisocyanaten, wie z. B. 2,4'-, 4,4'-Diphenylmethan-diisocyanat, Roh-MDI, 2,4- und/oder 2,6-Toluylen-diisocyanat gegebenenfalls gemischt werden. Sehr gut geeignet sind z.B. Mischungen aus mit Urethangruppen modifizierten Diphenylmethan-diisocyanaten und/oder Toluylendiisocyanaten und/oder Roh-MDI und gegebenenfalls unmodifizierten Diphenylmethan-diisocyanaten und/oderToluylen-diisocyanaten und/oder Roh-MDI.
   Besonders bewährt haben sich organische Polyisocyanate und kommen daher vorzugsweise zur Herstellung der erfindungsgemäßen Polyurethan-Formkörper zur Anwendung:
   Polyisocyanate mit aromatisch gebundenen Isocyanatgruppen einer mittleren NCO-Funktionalität von 2 bis 3. Zu den besonders bevorzugten Isocyanaten gehören bei Raumtemperatur flüssige Polyisocyanate bzw. Polyisocyanatgemische der Diphenylmethan-Reihe, d.h., bei Raumtemperatur flüssige Gemische von 4,4'-Diphenylmethandiisocyanat mit 2,4'-Diphenylmethandiisocyanaten, bei Raumtemperatur flüssige Carbodiimid- bzw. Uretonimin-modifizierte Derivate dieser Isocyanate und bei Raumtemperatur flüssige Umsetzungsprodukte dieser Isocyanate mit Polyolen. Diese Semiprepolymeren sind Umsetzungsprodukte mit einem NCO/OH-Äquivalentverhältnis von 2,2:1 bis 20:1.
b) Als höhermolekulare Polyhydroxylverbindungen (b) werden zweckmäßigerweise solche mit einer Funktionalität von 2 bis 8 und einem mittleren Molekulargewicht von 400 bis 12 000 verwendet. Besonders bewährt haben sich Polyole, ausgewählt aus der Gruppe der Polyether-polyole, Polyester-polyole, Polythioether-polyole, hydroxylgruppenhaltigen Polyesteramide, hydroxylgruppenhaltigen Polyacetale, hydroxylgruppenhaltigen aliphatischen Polycarbonate und polymermodifizerten Polyether-polyole oder Mischungen aus mindestens zwei der genannten Polyole. Insbesondere Anwendung finden Polyester-polyole und/oder Polyether-polyole.
   Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z. B. Dicarbonsäure-mono und/oder -diester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35:35 bis 50:20 bis 32 Gew.-Teilen, und insbesondere Adipinsäure. Beispiele für zwei- und mehrwertige Alkohole, insbesondere Diole und Alkylenglykole sind: Ethandiol, Diethylenglykol, 1,2- bzw. 1,3-Propandiol, Dipropylenglykol, Methyl-Propandiol-1,3, 1,4-Butandiol, 1,5-Pentandiol 1,6-Hexandiol, Neopentylglykol, 1,10-Decandiol, Glycerin, Trimethylolpropan und Pentaerythrit. Vorzugsweise verwendet werden Ethandiol, Diethylenglykol, 1,4-Butandiol, 1,6-Hexandiol, Glycerin, Trimethylolpropan oder Mischungen aus mindestens zwei der genannten Diole, insbesondere Mischungen aus Ethandiol, 1,5-Butandiol und 1,6-Hexandiol, Glycerin und/oder Trimethylolpropan. Eingesetzt werden können ferner Polyester-polyole aus Lactonen z.B. ε-Caprolacton oder Hydroxycarbonsäuren, z. B. ω-Hydroxycapronsäure.
   Zur Herstellung der Polyester-polyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Insertgasen, wie z.B. Stickstoff, Kohlenmonoxid, Helium, Argon u. a. in der Schmelze bei Temperaturen von 150 bis 200°C, vorzugsweise 180 bis 220°C gegebenenfalls unter vermindertem Druck bis zu der gewünschten Säurezahl, die vorteilhafterweise kleiner als 10, vorzugsweise kleiner als 1 ist, polykondensiert werden.
   Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z. B. Benzol, Toluol, Xylol oder Chlorbenzol, zur azeotropen Abdestillation des Kondensationswassers durchgeführt werden.
   Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.
   Die erhaltenen Polyester-polyole besitzen vorzugsweise eine Funktionalität von 2 bis 3, insbesondere 2 bis 2,6 und ein mittleres Molekulargewicht von 600 bis 6 000, vorzugsweise 1 000 bis 4 000.
   Als Polyether-polyole kommen solche in Betracht, die nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat, als Katalysatoren und unter Zusatz mindestens eines Startermoleküls, das 2 bis 8, vorzugsweise 2 oder 3, reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.
   Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, 1,3-Propylendiamin, 1,3- bzw. 1,4-Butylendiamin, 1,2-,1,3-,1,4-,1,5- und 1,6-Hexamethylendiamin, Phenylendiamine, 2,3-, 2,4- und 2,6-Toluylendiamin und 4,4'-, 2,4'- und 2,2'-Diaminodiphenylmethan. Als Startermoleküle kommen ferner in Betracht:
   Alkanolamine, wie z. B. Ethanolamin, N-Alkyl-alkanolamine, beispielsweise N-Methyl- und N-Ethyl-ethanolamin, Dialkanolamine, wie z.B. Diethanolamin, N-Alkyl-dialkanolamine, beispielsweise N-Methyl- und N-Ethyl-diethanolamin und Trialkanolamine, wie z.B. Triethanolamin und Ammoniak. Vorzugsweise verwendet werden mehrwertige, insbesondere zwei- und/oder dreiwertige Alkohole und/oder Dialkylenglykole, wie Ethandiol, Propandiol-1,2 und -1,3, Diethylenglykol, Dipropylenglykol, Butandiol-1,4, Hexandiol-1,6, Glycerin, Trimethylol-propan, Pentaerythrit, Sorbit und Sucrose oder Mischungen aus mindestens zwei mehrwertigen Alkoholen und gegebenenfalls zusätzlich Wasser.
   Die Polyether-polyole, vorzugsweise Polyoxypropylen- und Polyoxypropylenpolyoxyethylen-polyole, besitzen vorteilhafterweise eine Funktionalität von 2 bis 8, mittlere Molekulargewichte von 800 bis 12 000, vorzugsweise von 1 000 bis 6 000, und zweckmäßigerweise einen Gehalt an Alkaliionen von kleiner als 10 ppm. Als Polyether-polyole eignen sich ferner polymermodifizierte Polyether-polyole, vorzugsweise Pfropf-polyether-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90:10 bis 10:90. vorzugsweise 70:30 bis 30:70, in zweckmäßigerweise den vorgenannten Polyether-polyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyether-polyoldispersionen, die als disperse Phase, üblicherweise in einer Menge von 1 bis 50 Gew.-%, vorzugsweise 2 bis 25 Gew.-%, enthalten: z.B. anorganische Füllstoffe, Polyharnstoffe, Polyhydrazide, tert.-Aminogruppen gebunden enthaltende Polyurethane und/oder Melamin und die z.B. beschrieben werden in der EP-A-0 1 1 752 (CA 1 166 403), EP-B-01 1 752 (US 4 304 708), US-A-4 374 209 und DE-A-32 31 497.
   Die Polyether-polyole können ebenso wie die Polyester-polyole einzeln oder in Form von Mischungen verwendet werden. Ferner können sie mit den polymermodifizierten Polyether-polyolen oder Polyester-polyolen sowie den hydroxylgruppenhaltigen Polyesteramiden, Polyacetalen und/oder Polycarbonaten gemischt werden.
   Als hydroxylgruppenhaltige Polyacetale kommen z.B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.
   Als Hydroxylgruppen aufweisende Polycarbonate kommen solche der an sich bekannten Art in Betracht, die beispielsweise durch Umsetzung von Diolen, wie Propandiol-1,3, Butandiol-1,4 und/oder Hexandiol-1,6, Diethylenglykol, Trioxyethylenglykol oder Tetraoxyethylenglykol mit Diarylcarbonaten, z.B. Diphenylcarbonat, oder Phosgen hergestellt werden können.
   Zu den hydroxylgruppenhaltigen Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.
c) Die Formkörper auf Polyurethan-Basis können ohne oder unter Mitverwendung von Kettenverlängerungs- und/oder Vernetzungsmitteln (c) hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden z.B. niedermolekulare, mehrwertige Alkohole, vorzugsweise Diole und/oder Triole, mit mittleren Molekulargewichten kleiner als 480, vorzugsweise von 60 bis 300. In Betracht kommen beispielsweise Wasser, aliphatische, cycloaliphatische und/oder araliphatische Diole mit 2 bis 14, vorzugsweise 2 bis 6 Kohlenstoffatomen, wie z.B. Propandiol-1,3, Methyl-Propandiol-1,3, Decandiol-1,10, o-, m-, p-Dihydroxy-cyclohexan, Diethylenglykol, Triethylenglykol, Dipropylenglykol, Tripropylenglykol, Bis-(2-hydroxyethyl)-bisphenol A und Bis-(2-hydroxyethyl)-hydrochinon und vorzugsweise Ethandiol, Butandiol-1,4, Hexandiol-1,6, Triole, wie 1,2,4-, 1,3,5-Trihydroxy-cyclohexan, Trimethylolethan, Glycerin, Trimethylolpropan und Triethanclamin sowie hydroxylgruppenhaltige Polyalkylenoxide, z.B. mit mittleren Molekulargewichten bis 2 500, vorzugsweise von 130 bis 850, auf Basis Ethylen- und/oder 1,2-Propylenoxid und den vorgenannten zur Polyether-polyolherstellung genannten Startermolekülen.
   Als Kettenverlängerungsmittel eignen sich auch N,N'-dialkylsubstituierte, aromatische Diamine, die gegebenenfalls am aromatischen Rest durch Alkylgruppen substituiert sein können, mit 1 bis 20, vorzugsweise 1 bis 4 Kohlenstoffatomen im N-Alkylrest, wie z.B. N,N'-Diethyl-, N,N'-Di-sek.-pentyl N,N'-Di-sek.-hexyl-, N,N'-Di-sek.-decyl- und N,N'-Dicyclohexyl-, p-bzw. m-Phenylendiamin, N,N'-Dimethyl-, N,N'-Diethyl-, N,N'-Diisopropyl-, N,N'-Di-sek.butyl- und N,N'-Dicyclohexyl-4,4'-diamino-diphenylmethan und N,N'-Di-sek.butylbenzidin.
   Sofern die Verbindungen der Komponente (c) mitverwendet werden, können diese in Form von Mischungen oder einzeln eingesetzt werden, vorteilhafterweise in Mengen von 1 bis 30 Gew.-Teilen, vorzugsweise von 1,5 bis 14 Gew.-Teilen, bezogen auf 100 Gew.-Teile der höhermolekularen Verbindung (b) angewandt.
d) Als Katalysatoren (d) zur Herstellung der halbharten kompakten oder zelligen Formkörper werden insbesondere Verbindungen verwendet, die die Reaktion der Hydroxylgruppen enthaltenden Verbindungen der Komponente (b) und gegebenenfalls (c) mit den organischen, gegebenenfalls modifizierten Polyisocyanaten (a) stark beschleunigen. In Betracht kommen stark basische Amine. Genannt seien beispielsweise Amidine, wie 2,3-Dimethy-3,4,5,6-tetrahydropyrimidin, Diazabicycloundecan, tertiäre Amine, wie Triethylamin, Tributylamin, Dimethylbenzylamin, N-Methyl-, N-Ethylmorpholin, N,N,N',N'-Tetramethylethylendiamin, Pentamethyldiethylentriamin, Tetramethyl-diaminoethylether, Bis-(dimethylaminopropyl)-Harnstoff, Dimethylpiperazin, 1,2-Dimethylimidazol, 1-Aza-bicyclo-(3,3,0)-octan, insbesondere auch Alkanolaminverbindungen, wie Triethanolamin, Triisopropylamin, N-Methyl-, N-Ethyldiethanolamin und vorzugsweise 1,4-Diazabicyclo-(2,2,2)-octan und dessen Gemische mit den zuvor genannten basischen Aminen.
   In Betracht kommen auch organische Metallverbindungen, vorzugsweise organische Zinnverbindungen, wie Zinn-(II)-salze von organischen Carbonsäuren und die Dialkylzinn-(IV)-salze von organischen Carbonsäuren. Die organischen Metallverbindungen werden allein oder vorzugsweise in Kombination mit den zuvor erwähnten stark basischen Aminen eingesetzt.
e) Bei der Herstellung der Formkörper wird ein Gemisch aus einem Carbodiimid, bzw. Carbodiimiden, und einem Lacton, bzw. Lactonderivaten als stabilisierendes Hilfsmittel eingesetzt, das hydrolytisch bedingte Alterungserscheinungen des PUR-Formkörpers erheblich verzögert.
   Besonders geeignet hat sich das Carbodiimid des Diisopropylphenylisocyanats erwiesen (STABAXOL I® der Fa. Rheinchemie), aber auch weitere Carbodiimide als Reaktionsprodukte aus monofunktionellen Isocyanaten sowie polymere Carbodiimide als Reaktionsprodukte di- und höherfunktioneller Isocyanate zeigen die erfindungsgemäße Eigenschaft.
   Geeignete Lactonderivate sind γ-Valerolacton, γ-Decalacton, δ-Decalacton und δ-Dodecalacton. insbesondere ε-Caprolacton und besonders γ-Butyrolacton, sowie auch Gemische der erwähnten Lactone. Die Anteile des erfindungsgemäßen Gemisches in der PUR-Reaktionsmasse betragen 0,5 bis 20 Gew.-% der Lactonkomponente und 0,2 bis 4,0 Gew.-% der Carbodiimid-Komponente, bevorzugt 0,8 bis 10 Gew.-% der Lacton-, und 0,5 bis 2,5 Gew.-% der Carbodiimid-Komponente.
f) Zur Herstellung der erfindungsgemäßen Formkörper können gegebenenfalls auch Hilfsmittel und Zusatzstoffe (f) mitverwendet werden.
   Als Zusatzstoffe und Hilfsmittel genannt seien beispielsweise Treib- und Blähmittel, oberflächenaktive Substanzen, Schaumstabilisatoren, Zellregler, Gleitmittel, Füllstoffe, Farbstoffe, Pigmente, Antistatika sowie fungistatisch und bakteriostatisch wirkende Substanzen.

Als Treib- und Blähmittel wird vorzugsweise Wasser verwendet, das mit den organischen, gegebenenfalls modifizierten Polyisocyanaten (a) unter Bildung von Kohlendioxid und Harnstoffgruppen reagiert. Das Wasser wird üblicherweise in Einsatzmengen von 0,03 bis 3 Gew.-%, vorzugsweise von 0,05 bis 1,5 Gew.-% in der PUR-Reaktionsmasse eingesetzt. Als gegebenenfalls mitzuverwendende Treibmittel können anstelle oder vorzugsweise in Kombination mit Wasser auch niedrigsiedende Flüssigkeiten, die unter dem Einfluß der exothermen Polyadditionsreaktion verdampfen und vorteilhafterweise einen Siedepunkt unter Normaldruck im Bereich von -40 bis 100°C, vorzugsweise von 0 bis 60°C besitzen, oder Gase eingesetzt werden.

Die als Treibmittel geeigneten Flüssigkeiten und Gase der oben genannten Art können z.B. ausgewählt werden aus der Gruppe der Alkane, Dialkylether, Dialkylenether, Ketone, Carbonsäureester, Fluoralkane, Chlorfluoralkane sowie der Edelgase, Stickstoff und Kohlendioxid. Nähere Angaben über die obengenannten anderen üblichen Hilfs- und Zusatzstoffe sind der Fachliteratur, beispielsweise dem Kunststoffhandbuch, Polyurethane, Band VII, Carl-Hanser-Verlag, München, Wien, 1., 2. und 3. Auflage 1966, 1983 und 1994 zu entnehmen.

Zur Herstellung der Formkörper werden die organischen, gegebenenfalls modifizierten Polyisocyanate (a), höhermolekularen Polyhydroxylverbindungen (b) und gegebenenfalls niedermolekularen Kettenverlängerungs- und/oder Vernetzungsmittel (c) in solchen Mengen zur Umsetzung gebracht, daß das Äquivalenz-Verhältnis von NCO-Gruppen der Polyisocyanate (a) zur Summe der reaktiven Wasserstoffatome der restlichen Komponenten 1:0,3 bis 1:2, vorzugsweise 1:0,4 bis 1:1,7 und insbesondere 1:0,9 bis 1:1,1 beträgt.

Die Formkörper können nach bekannten Verfahren, wie z.B. dem Prepolymer-, Semiprepolymer-Verfahren oder one-shot-Verfahren mit Hilfe der Hochdrucktechnik oder vorzugsweise der Niederdrucktechnik hergestellt werden. Die Herstellung von Formkörpern wird zweckmäßigerweise in geschlossenen, temperierbaren Formwerkzeugen, z.B. metallischen Formwerkzeugen, beispielsweise aus Aluminium, Gußeisen oder Stahl, oder Formwerkzeugen aus faserverstärkten Polyester- oder Epoxidharzformmassen, durchgeführt. Niedrigviskose, gut fließfähige und daher verbessert verarbeitbare Formulierungen können auch mit Hilfe der Reaktionsspritzgußtechnik (RIM-Technik) zu Formkörpern verarbeitet werden.

Diese Verfahrensweisen werden beispielsweise beschrieben von Dr. H. Piechota und Dr. H. Röhr in "Integralschaumstoffe", Carl-Hanser-Verlag, München, Wien 1975; D. J. Prepelka und J. L. Wharton in Journal of Cellular Plastics, März/April 1975, Seiten 87 bis 98, U. Knipp in Journal of Cellular Plastics, März/April 1973, Seiten 76 bis 84 und im Kunststoffhandbuch, Band 7, Polyurethane, 2. Auflage, 1983, Seiten 333 ff.

Bei dem erfindungsgemäßen Verfahren werden die Komponenten (a) bis (f) vorzugsweise nach dem one-shot-Verfahren in geschlossenen Formen zur Reaktion gebracht. Hierbei kommen mehrere, vorzugsweise 2 oder 3 Reaktionskomponenten zum Einsatz, wobei die Polyisocyanatkomponente (a) im allgemeinen eine und die anderen Ausgangskomponenten (b) bis (f) eine oder mehrere andere Reaktionskomponenten bilden.

Die erfindungsgemäße Komponente (e) kann aber auch separat oder in Kombination mit der Komponente (a) bzw. (b) oder (c) sowie (f), falls diese weitgehend wasserfrei (<0,05 Gew.-%) ist, dosiert werden.

Als besonders vorteilhaft hat es sich erwiesen, nach dem Zweikomponenten-Verfahren zu arbeiten und die Komponenten (b) bis (f) in der Komponente (B) zu vereinigen und als Komponente (A) die organischen Polyisocyanate, modifizierten Polyisocyanate oder Mischungen aus den genannten Polyisocyanaten zu verwenden.

Die Ausgangskomponenten werden bei einer Temperatur von 15 bis 100°C, vorzugsweise von 25 bis 55°C gemischt und bei Normaldruck oder unter erhöhtem Druck in das offene oder geschlossene Formwerkzeug eingebracht. Die Vermischung kann mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 10 bis 140°C, vorzugsweise 20 bis 80°C.

Nach einer Formstandzeit von 0,5 bis 10 min, vorzugsweise 1 bis 6 min werden im allgemeinen ausreichend verfestigte Formkörper erhalten, die direkt entformt werden oder aber mit einer oder mehreren weiteren PUR-Reaktionsmassen direkt folgend überschichtet werden, so daß bei oftmals nur gewechseltem Formendeckel mehrschichtige PUR-Formteile erhalten werden.

Die Menge des in das Formwerkzeug eingebrachten erfindungsgemäßen Reaktionsgemisches wird vorteilhafterweise so bemessen, daß die erhaltenen Formkörper auf Polyurethan-Basis eine Rohdichte von 150 bis 1 400 kg/m³, bei einer Härte von 20 bis 90 Shore A, bevorzugt aber 200 bis 700 kg/m³ mit 30 bis 80 Shore A sowie 900 bis 1 250 kg/m³ mit 50 bis 80 Shore A aufweisen.

Derartige Polyurethan-Kunststoffe stellen besonders wertvolle Rohmaterialien für üblicherweise bewitterte, gegenüber Feuchtigkeit ausgesetzte technische Artikel, wie Rollen und Federelementen, oder auch Schuhsohlen in ein- oder mehrschichtiger Aufbauvariante dar.

### Beispiele

In den angeführten Beispielen wurden isocyanathaltige Prepolymere folgender Zusammensetzungen eingesetzt:
1) Prepolymere (A₁):
   - 56,5 Gew.-% 4,4'-MDI
   - 6,5 Gew.-% Carbodiimid-modifiziertes 4,4'-MDI
   - 37,0 Gew.-% Polyethylenbutylenadipat, OHZ: 55
      Der resultierende NCO-Gehalt beträgt 19,3 %.
2) Prepolymer (A₂):
   - 56,6 Gew.-% 4,4'-MDI
   - 6,0 Gew.-% Carbodiimid-modifiziertes 4,4'-MDI
   - 37,4 Gew.-% Polyoxypropylenoxyethylenblock-copolyetherdiol, OHZ: 28
      Der resultierende NCO-Gehalt beträgt 19,2 %.
3) Prepolymer (A₃):
   - 56,3 Gew.-% 4,4'-MDI
   - 6,2 Gew.-% Carbodiimid-modifiziertes 4,4'-MDI
   - 23,6 Gew.-% Polyethylenbutylenadipat, OHZ: 55
   - 13,9 Gew.-% Polyoxypropylenoxyethylenblock-copolyetherdiol, OHZ: 28
      Der resultierende NCO-Gehalt beträgt 19,0 %

Als Polyolkomponenten finden folgende Materialien Verwendung:
4) Polyesterpolyol (B₁), ein lineares Polyethylenbutylenadipat, OHZ: 55
5) Polyesterpolyol (B₂), ein lineares Polyethylenbutylenadipat, OHZ: 37
6) Polyetherpolyol (B₃), ein lineares Polyoxypropylenoxyethylenblockcopolyetherdiol, OHZ: 28
7) Polyetherpolyol (B₄), ein auf Trimethylolpropan gestartetes Polyoxyethylenoxypropylenblockcopolyetherdiol, OHZ: 35

### Beispiel 1

Das Prepolymer (A₁) wird mit einer Mischung (C₁), bestehend aus
91,2 Gew.-% Polyol (B₁),
1,5 Gew.-% Stabaxol I (Fa. Rheinchemie),
5,5 Gew. % 1,4-Butandiol und
1,8 Gew.-% Diazabicyclooctan verarbeitet.

Die Materialtemperaturen betragen jeweils 45°C, das Mischungsverhältnis der Komponenten (C₁) zu (A₁) liegt bei 100:47,0 Gew.-Teile. Durch Einsatz einer Niederdruck-Verarbeitungsmaschine, z.B. einer PSA 95 der Fa. Klöckner Ferromatik Desma GmbH, erhält man kompakte, innerhalb von 3 Minuten ausreagierte PUR-Formkörper in einer Dichte von 1 200 kg/m³ und einer Härte von 68 Shore A.

Zur Prüfung der Feuchtalterungsbeständigkeit wird der Zugversuch gemäß DIN 53 504 i.A. sowohl vor als auch nach Feuchtlagerung gemäß DIN 53 508 i.A., d.h., 7 d bei 70°C und 95 % rel. Luftfeuchte, gemessen. Die Zugfestigkeit nimmt dabei von 21,0 MPa auf 3,0 MPa ab.

### Beispiel 2

Das Prepolymer (A₁) wird mit einer Mischung (C₂), bestehend aus
86,2 Gew.-% Polyol (B₁),
1,5 Gew.-% Stabaxol I (Fa. Rheinchemie),
5,5 Gew.-% 1,4-Butandiol,
5,0 Gew.-% γ-Butyrolacton
1,8 Gew.-% Diazabicyclooctan analog Beispiel 1 verarbeitet. Das Mischungsverhältnis der Komponenten (C₂) zu (A₁) liegt bei 100:46,5. Die mechanische Prüfung weist nur einen Abfall der Zugfestigkeit von 20,5 MPa nach 12,8 MPa auf.

### Beispiel 3

Das Prepolymer (A₂) wird mit der Polyolmischung (C₁) aus Beispiel 1 bei einem Mischungsverhältnis von 100 Teilen (C₁) 48,4 Teilen (A₂) verarbeitet. Die Zugfestigkeit des massiven PUR füllt nach Lagerung analog Beispiel 1 von 12,7 MPa auf 1,8 MPa ab.

### Beispiel 4

Das Prepolymer (A₂) wird mit der Polyolmischung (C₂) aus Beispiel 2 bei einem Mischungsverhältnis von 100 Teilen (C₂) zu 48,0 Teilen (A₂) verarbeitet. Die Zugfestigkeit des massiven PUR füllt nach Lagerung analog Beispiel 1 von 11,8 MPa nur auf 6,8 MPa ab.

### Beispiel 5

Das Prepolymer (A₁) wird mit einer Mischung (C₃), bestehend aus
81,0 Gew.-% Polyol (B₃),
12,1 Gew.-% Polyol (B₄),
1,2 Gew.-% Stabaxol I,
4,3 Gew.-% Ethandiol,
1,4 Gew.-% Diazabicyclooctan verarbeitet.

Die Materialtemperaturen betragen für Komponente (A₁) 40°C, für Komponente (C₃) 30°C. Das Mischungsverhältnis der Komponenten (C₃) zu (A₁) liegt bei 100:41 Gew.-Teilen.

Die Zugfestigkeit des resultierenden massiven PUR liegt bei 12,4 MPa, nach Alterung analog Beispiel 1 bei 3,2 MPa.

### Beispiel 6

Das Prepolymer (A₁) wird mit einer Mischung (C₄) bestehend aus
75,5 Gew.-% Polyol (B₃),
12,1 Gew.-% Polyol (B₄),
1,2 Gew.-% Stabaxol I,
4,3 Gew.-% Ethandiol
1,4 Gew.-% Diazabicyclooctan
5,5 Gew.-% γ-Butyrolacton analog Beispiel 5 verarbeitet. Das Mischungsverhältnis von (C₄) zu (A₁) beträgt 100:40 Gew.-Teile. Die Zugfestigkeit des resultierenden massiven PUR liegt bei 11,1 MPa, nach Alterung analog Beispiel 1 bei 6,1 MPa.

### Beispiel 7

Das Prepolymer (A₃) wird mit einer Mischung (C₅), bestehend aus
91,50 Gew.-% Polyol (B₂),
1,30 Gew.-% Stabaxol I,
5,75 Gew.-% 1,4-Butandiol,
0,35 Gew.-% Ethandiol,
1,10 Gew.-% Diazabicyclooctan verarbeitet. Die Materialtemperaturen betragen für Komponente (A₃) 30°C, für Komponente (C₅) 55°C. Das Mischungsverhältnis von (C₅) zu (A₃) beträgt 100:43,5. Die Zugfestigkeit des resultierenden massiven PUR liegt bei 22,4 MPa, nach Alterung analog Beispiel 1 dagegen nur bei 4,1 MPa.

### Beispiel 8

Das Prepolymer (A₃) wird mit einer Mischung (C₆), bestehend aus
85,10 Gew.-% Polyol (B₂),
1,30 Gew.-% Stabaxol I,
5,75 Gew.-% 1,4-Butandiol,
0,35 Gew.-% Ethandiol,
6,40 Gew.-% γ-Butyrolacton,
1,10 Gew.-% Diazabicyclooctan verarbeitet. Die Materialtemperaturen betragen für Komponente (A₃) 30°C, für Komponente (C₆) 55°C. Das Mischungsverhältnis von (C₆) zu (A₃) beträgt 100:43,0. Die Zugfestigkeit des resultierenden massiven PUR liegt bei 21,8 MPa, nach Alterung analog Beispiel 1 bei 11,1 MPa.

### Beispiel 9

Das Prepolymer (A₁) wird mit einer Mischung (C₇), bestehend aus
89,00 Gew.-% Polyol (B₁),
8,65 Gew.-% Ethandiol,
0,35 Gew.-% Wasser,
1,20 Gew.-% Stabaxol I,
0,80 Gew.-% Diazabicyclooctan verarbeitet.

Die Materialtemperaturen betragen für Komponente (A₁) 40°C, für Komponente (C₇) 45°C. Das Mischungsverhältnis von (C₇) zu (A₁) beträgt 100:86 Gew.Teile. Das resultierende PUR mit einer Freischaumdichte von 310 kg/m³ wird zu Formteildichten von 550 kg/m³ verarbeitet. Die Zugfestigkeit dieses geschäumten PUR-Materials liegt bei 8,2 MPa, nach Alterung analog Beispiel 1 bei 6,1 MPa.

### Beispiel 10

Das Prepolymer (A₁) wird mit einer Mischung (C₈), bestehend aus
84,30 Gew.-% Polyol (B₁),
8,65 Gew.-% Ethandiol,
0,35 Gew.-% Wasser,
1,20 Gew.-% Stabaxol I,
4,70 Gew.-% γ-Butyrolacton,
0,80 Gew.-% Diazabicyclooctan analog Beispiel 9 verarbeitet. Das Mischungsverhältnis von Komponente (C₈) zu (A₁) beträgt 100:87. Das resultierende PUR mit einer Freischaumdichte von 320 kg/m³ wird zu Formteildichten von 550kg/m³ verarbeitet. Die Zugfestigkeit dieses geschäumten PUR-Materials liegt bei 7,9 MPa, nach Alterung analog Beispiel 1 bei 7,1 MPa.

## Patentansprüche

1. Verfahren zur Herstellung halbharter kompakter oder zelliger Formkörper auf Polyurethan-Basis durch Umsetzung von
a) organischen und/oder modifizierten organischen Polyisocyanaten mit
b) einer oder mehreren höhermolekularen Polyhydroxyl-Verbindungen,
c) Kettenverlängerungs- und/oder Vernetzungsmitteln,
d) Reaktionsbeschleunigern bzw. Katalysatoren,
e) einem Wirkstoffgemisch aus einem Carbodiimid- und einem Lacton-Derivat, sowie
f) gegebenenfalls weiteren Hilfs- und Zusatzstoffen,
**dadurch gekennzeichnet, daß** die Komponente a) und/oder b) eine hydrolytisch spaltbare Esterpolyolkomponente enthält, und daß der Zusatz der Wirkstoffkombination e) in das Reaktionsgemisch seitens des ausgewählten Lactons zu 0,5 bis 20,0 Gew.-%, vorzugsweise zu 0,8 bis 10,0 Gew.-%, und seitens des gewählten Carbodiimid-Gruppenhaltigen Derivats zu 0,2 bis 4,0 Gew.-%, vorzugsweise zu 0,5 bis 2,5 Gew.-% erfolgt.

2. Polyestergruppenhaltige Polyurethan-Reaktionsmassen als halbharte kompakte oder zellige Formkörper, hergestellt nach Anspruch 1, **dadurch gekennzeichnet, daß** sie zur Stabilisierung gegen hydrolytische Alterungserscheinungen eine Wirkstoffkombination aus Carbodiimid-haltiger Verbindung und einem Lacton-Derivat enthalten.

3. Formkörper hergestellt nach Anspruch 1, **dadurch gekennzeichnet, daß** als Wirkstoffkombination das Carbodiimid des Diisopropylphenylisocyanats und γ-Butyrolacton als Lacton eingesetzt wird.

4. Formkörper hergestellt gemäß Anspruch 1, **dadurch gekennzeichnet, daß** als Wirkstoffkombination das Carbodiimid des Diisopropylphenylisocyanats und ε-Caprolacton als Lacton eingesetzt wird.

5. Formkörper hergestellt nach Anspruch 1, **dadurch gekennzeichnet, daß** deren Dichte 150 bis 1 400 kg/m³ beträgt.

6. Verwendung der Formkörper auf Polyurethanbasis nach einem der Ansprüche 2 bis 5 als technische Artikel, die üblicherweise der Witterung ausgesetzt sind, und auch als Schuh- und Schuhsohlenmaterial.

## Claims

1. A process for producing semi-rigid solid or cellular polyurethane-based mouldings by reacting
a) organic and/or modified organic polyisocyanates with
b) one or more relatively high molecular weight polyhydroxyl compounds,
c) chain extenders and/or crosslinking agents,
d) reaction accelerators or catalysts,
e) an active substance mixture comprising a carbodiimide derivative and a lactone derivative,
f) optionally together with further auxiliary substances and additives,
**characterised in that** component a) and/or b) contains a hydrolytically cleavable ester polyol component, and that addition of the active substance combination e) to the reaction mixture results in a content of the selected lactone of 0.5 to 20.0 wt.%, preferably of 0.8 to 10.0 wt.%, and in a content of the selected derivative containing carbodiimide groups of 0.2 to 4.0 wt.%, preferably of 0.5 to 2.5 wt.%.

2. Polyurethane reaction compositions containing polyester groups as semi-rigid solid or cellular mouldings, produced according to claim 1,
**characterised in that** they are stabilised against hydrolytic ageing phenomena by containing an active substance combination comprising a compound containing carbodiimide and a lactone derivative.

3. Mouldings produced according to claim 1, **characterised in that** the active substance combination used is the carbodiimide of diisopropylphenyl isocyanate with γ-butyrolactone as the lactone.

4. Mouldings produced according to claim 1, **characterised in that** the active substance combination used is the carbodiimide of diisopropylphenyl isocyanate with ε-caprolactone as the lactone.

5. Mouldings produced according to claim 1, **characterised in that** the density thereof is 150 to 1400 kg/m³.

6. Use of the polyurethane-based mouldings according to any one of claims 2 to 5 as industrial articles which are conventionally exposed to weathering, and also as shoe and shoe sole material.

## Revendications

1. Procédé pour la fabrication d'objets moulés semi-rigides, compacts ou cellulaires, à base de polyuréthanne par réaction de
a) des polyisocyanates organiques et/ou organiques modifiés avec
b) un ou plusieurs composés polyhydroxylés à haut poids moléculaire,
c) des agents d'allongement des chaînes et/ou agents réticulants,
d) des accélérateurs de la réaction ou catalyseurs,
e) un mélange de substances actives consistant en un carbodiimide et une lactone ou dérivés, et
f) le cas échéant, d'autres produits auxiliaires et additifs,
**caractérisé en ce que** le composant a) et/ou b) contient un composant ester-polyol scindable par hydrolyse et **en ce que** la combinaison de substances actives e) introduite dans le mélange de réaction représente de 0,5 à 20,0 % en poids, de préférence de 0,8 à 10,0 % en poids pour la lactone, et de 0,2 à 4,0 % en poids, de préférence de 0,5 à 2,5 % en poids pour le carbodiimide ou dérivé de carbodiimide.

2. Masses, contenant des groupes polyester, obtenues par une réaction de formation d'un polyuréthanne, sous forme d'objets moulés semi-rigides, compacts ou cellulaires, préparés selon la revendication 1, **caractérisées en ce qu'**elles contiennent, pour la stabilisation contre les phénomènes de vieillissement dus à une hydrolyse, une combinaison de substances actives consistant en un carbodiimide et une lactone ou dérivés.

3. Objets moulés fabriqués selon la revendication 1, **caractérisés en ce que** la combinaison de substances actives consiste en le carbodiimide du diisopropylphénylisocyanate et la γ-butyrolactone.

4. Objets moulés fabriqués selon la revendication 1, **caractérisés en ce que** la combinaison de substances actives consiste en le carbodiimide du diisopropylphénylisocyanate et l'ε-caprolactone.

5. Objets moulés fabriqués selon la revendication 1, **caractérisés en ce que** leur densité apparente est de 150 à 1400 kg/m³.

6. Utilisation des objets moulés à base de polyuréthanne selon l'une des revendications 2 à 5 sous la forme d'articles techniques habituellement exposés aux influences climatiques ou en tant que matériaux pour la fabrication de chaussures et de semelles de chaussures.
